# EUROPÄISCHE PATENTANMELDUNG

(11) **EP 2 113 728 A1**
(43) Veröffentlichungstag der Anmeldung: **04.11.2009**
(21) Anmeldenummer: 08008173.0
(22) Anmeldetag: 29.04.2008
(51) Int. Cl.: F24J 3/08

(54) **Koaxialsonde für die Erdwärmegewinnung**

(71) Anmelder: Akatherm FIP GmbH, 68229 Mannheim (DE)
(72) Erfinder: Rossel, Werner, 67105 Schifferstadt (DE); Thielen, Jürgen, 69488 Birkenau (DE)
(74) Vertreter: Tönhardt, Marion

(57) **Zusammenfassung**

Die Erfindung betrifft eine Sonde für die Erdwärmegewinnung mit einem Sondenkopf bestehend aus einem Oberteil und einem Unterteil, wobei der Sondenkopf eine fluidische Verbindung zwischen einem Vorlauf und zumindest zwei Rückläufen bereitstellt. In einer vorteilhaften Ausführungsform besitzt eine erfindungsgemäße Sonde neben einem zentralen Vorlauf vier äquidistant um diesen angeordnete Rückläufe, welche wiederum zueinander gleich beabstandet sind. Zur Erzielung möglichst turbulenter Strömung des Erdsondenmediums weist eine erfindungsgemäße Sonde darüber hinaus in einem von Sondenoberteil und unterteil gebildeten Hohlraum eine Anformung auf, welche derart gewählt ist, daß das durch den Vorlauf in den Hohlraum eintretende Medium den Hohlraum darüber hinaus möglichst homogen durchdringt und im folgenden ebenfalls zu gleichen Anteilen über die bereitgestellten Rückläufe abfließt.

## Beschreibung

Die Erfindung betrifft eine Sonde für die Erdwärmegewinnung mit einem Sondenkopf, bestehend aus einem Oberteil und einem Unterteil.

Bei derartigen Erdewärmesonden mit einem Vorlauf- und einem Rücklaufkanal in koaxialer Anordnung ist in der Regel der Vorlauf durch ein Innenrohr bereitgestellt, wobei der Rücklauf im folgenden zwischen der Außenbewandung des Innenrohrs und der Innenbewandung des Außenrohrs ausgebildet wird.

Eine solche Erdwärmesonde ist bereits aus der DE 20 2007 006 682 U1 bekannt, bei welcher ein Vorlaufkanal und ein Rücklaufkanal in koaxialer Anordnung zueinander bereitgestellt sind, und wobei ein Innenrohr, welches den Vorlaufkanal bildet, mittels längs verlaufender Abstandshalter in einem Außenrohr über die gesamte Länge lose zentrisch positioniert und längs verschiebbar angeordnet ist, und wobei der Rücklaufkanal zwischen der Außenbewandung des Innenrohrs und der Innenbewandung des Außenrohrs ausgebildet wird. Der Übergang des Wärmetransportmediums vom Innenkanal in den Außenkanal, also vom Vorlauf in den Rücklauf, wird im unteren Teil der Erdwärmesonde durch eine Abkantung am im Außenrohr gelagerten Innenrohr bereitgestellt.

Obwohl die im Stand der Technik bekannten Erdwärmesonden in koaxialer Anordnung bereits gegenüber herkömmlichen Erdwärmesonden in U- oder Doppel-U-Anordnung von Vorlauf und Rücklauf einen verbesserten Wirkungsgrad aufweisen, besteht auch bei diesen noch der Wunsch, die Effizienz solcher Systeme zu erhöhen.

Neben der grundsätzlich physikalisch bedingten Notwendigkeit eines möglichst großen Gradienten zwischen Vorlauf- und Rücklauftemperatur zur Erreichung eines optimierten Wirkungsgrades, hat sich herausgestellt, daß es darüber hinaus zweckdienlich ist, in der Erdwärmesonde eine laminare Fluidströmung zu verhindern. Da die Vorlauf- und Rücklaufleitungen in der Regel mittels herkömmlicher Rundrohre unterschiedlicher Wärmeleitfähigkeit realisiert werden, ist es am sinnvollsten zu erachten, die erforderliche Verhinderung eines laminaren Fluidstromes in der Erdwärmesonde dadurch zu erreichen, daß der Sondenkopf eine zweckmäßige Ausformung oder geeignete Mittel aufweist. Leider bietet der Stand der Technik bis heute diesbezüglich nur wenig befriedigende Lösungsvorschläge.

Der Erfindung liegt demnach die Aufgabe zugrunde, zwecks Erhöhung des Wirkungsgrades eine Erdwärmesonde zu entwickeln, welche einen möglichst großen Temperaturgradienten zwischen Sondenvorlauf und -rücklauf zuläßt und darüber hinaus die effiziente Unterdrükkung von laminarer Strömung innerhalb der Erdwärmesonde bereitstellt.

Diese Aufgabe wird in Verbindung mit dem Oberbegriff des Patentanspruchs 1 erfindungsgemäß dadurch gelöst, daß der Sondenkopf eine fluidische Verbindung zwischen einem Vorlauf und zumindest zwei Rückläufen bereitstellt.

Eine erfindungsgemäße Erdwärmesonde besteht neben den den Vorlauf und den Rücklauf bereitstellenden Rohrleitungen im wesentlichen aus einem Sondenkopf, welcher wiederum aus einem Oberteil und einem Unterteil besteht, wobei das Oberteil und das Unterteil im zusammengesetzten Zustand einen Hohlraum im Innern des Sondenkopfs bilden, welcher ausschließlich über Anschlüsse am Sondenkopf zugänglich ist. Zweckmäßigerweise weist ein erfindungsgemäßer Sondenkopf einen ausreichend dimensionierten Zugang zu dem Hohlraum für den Vorlauf sowie zumindest zwei Zugänge zum Anschluß von zumindest zwei Rückläufen auf. Sinnvollerweise, aber nicht zwingend, entspricht die Summe der Querschnittsflächen der Rücklaufzugänge der Querschnittsfläche des Vorlaufzugangs. Darüber hinaus müssen die Rücklaufzugänge nicht unbedingt einen bezüglich Größe und Geometrie untereinander identischen Querschnitt aufweisen.

Zur möglichst effektiven thermischen Isolierung des Vorlaufs vom erwärmten Erdreich sind zweckmäßigerweise die zumindest zwei Rückläufe beispielsweise gleich beabstandet voneinander, also äquidistant zu jeweils benachbarten Anschlüssen, um den zentral gelegenen Vorlauf angeordnet. Gleichermaßen wird durch die Aufteilung des Rücklaufs auf verschiedene Teilströme, welche über entsprechende Rohrleitungen zurück in den oberirdischen Wärmetauscher geleitet werden, eine Vergrößerung der Kontaktfläche zwischen Erdreich und Rücklaufrohrbewandung erreicht. Dies hat wiederum den Vorteil einer möglichst effizienten Einkopplung der Erdwärme in das rücklaufende Trägermedium, neben der bereits damit einhergehenden Einschränkung der Ausbildung laminarer Strömung.

Bei einer Ausführungsform des Erfindungsgegenstandes weist der Sondenkopf neben dem Anschluß für den Vorlauf Anschlüsse für zumindest zwei Rückläufe auf, welche wiederum äquidistant zu einer Berandung des Vorlaufs angeordnet sind. Auch zur möglichst effizienten Abschirmung des Vorlaufs von der Erdwärme, und damit zur Maximierung des Temperaturgradienten zwischen Vorlauf und Rücklauf, sind die Anschlüsse, und sinnvollerweise ebenfalls die daran angeschlossenen Rohrleitungen für die Rückläufe, darüber hinaus untereinander äquidistant zu jeweils benachbarten Anschlüssen beziehungsweise Rohrleitungen angeordnet.

Beispielsweise weist bei dieser zweckmäßigen Ausführungsform der Erfindung der Sondenkopf vier Rücklaufanschlüsse auf, deren Symmetrieachsen einen geschlossenen Lochkreis schneiden und entlang des Lochkreises äquidistant, also um jeweils einen 90°-Kreisbogen voneinander beabstandet sind.

Zusätzlich wird die Unterdrückung von laminarer Strömung im Erdwärmesondeninnern erfindungsgemäß dadurch erreicht, daß der von Oberteil und Unterteil des Sondenkopfs gebildete Hohlraum auf seiner Berandung eine Anformung aufweist, welche derart ausgeformt und angeordnet ist, daß ein im Betrieb der Sonde durch den Vorlauf eintretender Fluidstrom möglichst zentral auf die Anformung trifft.

Zweckmäßigerweise ist die Anformung dazu im wesentlichen konvex ausgeprägt und an einer Stelle angeordnet, wo sie unmittelbar dem eintretenden Fluidstrom ausgesetzt ist. Dies kann am einfachsten dadurch erreicht werden, daß die Anformung direkt unterhalb des Vorlaufanschlusses angeordnet ist, etwa derart, daß die Symmetrieachsen von Vorlauf und Anformung zusammenfallen.

Die erwähnte konvexe Anformung kann bereits dadurch realisiert sein, daß diese im wesentlichen die Form einer Halbkugel oder eines anderen Kugelsegments aufweist. Alterntiv kann die Anformung auch im wesentlichen die Form eines Kegels aufweisen.

Für die Erzielung einer möglichst turbulenten Fluidströmung im Innern der Erdwärmesonde hat es sich als vorteilhaft herausgestellt, wenn die Anformung bezüglich des Verlaufs der Berandung des Hohlraums in Betriebstellung der Sonde an einer tiefstgelegenen Position im Hohlraum angeordnet ist. Dies kann bereits dadurch realisiert sein, daß die in der Regel vom Unterteil des Sondenkopfes vorgegebene Berandung des Hohlraums in Richtung der Anformung im wesentlichen kegelförmig oder trichterförmig zusammenläuft.

Erfindungsgemäß wird vorgeschlagen, die Berandung des Hohlraums mit einen vorgegebenen Oberflächenrelief bei einer vorgegebenen Rauhigkeit zu versehen, was zusätzlich dazu beiträgt, daß sich ein inhomogenes Fluidstromgeschwindigkeitsprofil im Innern des Hohlraums ausprägt, und damit laminare Strömung im Zusammenwirken mit der Anformung weitestgehend verhindert wird.

Um ein möglichst verarbeitungsfreundliches System bei gleichzeitig hoher Widerstandsfähigkeit desselben gegenüber mechanischen Einwirkungen beim Einbringen ins Erdreich zu realisieren, können die Komponenten des Systems insbesondere die Leitungen für Vor- und Rücklauf sowie das Ober- und das Unterteil des Erdsondenkopfes zumindest teilweise aus einem elastischen und schmelzbaren Kunststoff hergestellt sein, so daß ein solches System darüber hinaus den Vorteil aufweist, daß die bei der Montage notwendigerweise zu realisierenden Verbindungen, zum Beispiel zwischen den Vor- bzw. Rücklaufrohren und dem Erdsondenkopf, auf einfache Art und Weise mittels Heizelementmuffenschweißens (HD) ausgebildet werden können.

Weitere Einzelheiten der Erfindung werden in der Zeichnung anhand von schematisch dargestellten Ausführungsbeispielen beschrieben.

### Hierbei zeigt:

- Figur 1: eine Schnittansicht eines Sondenkopfoberteils,
- Figur 2: eine Draufsicht eines Sondenkopfoberteils,
- Figur 3: eine Schnittansicht eines Sondenkopfunterteils,
- Figur 4: eine Draufsicht eines Sondenkopfunterteils.

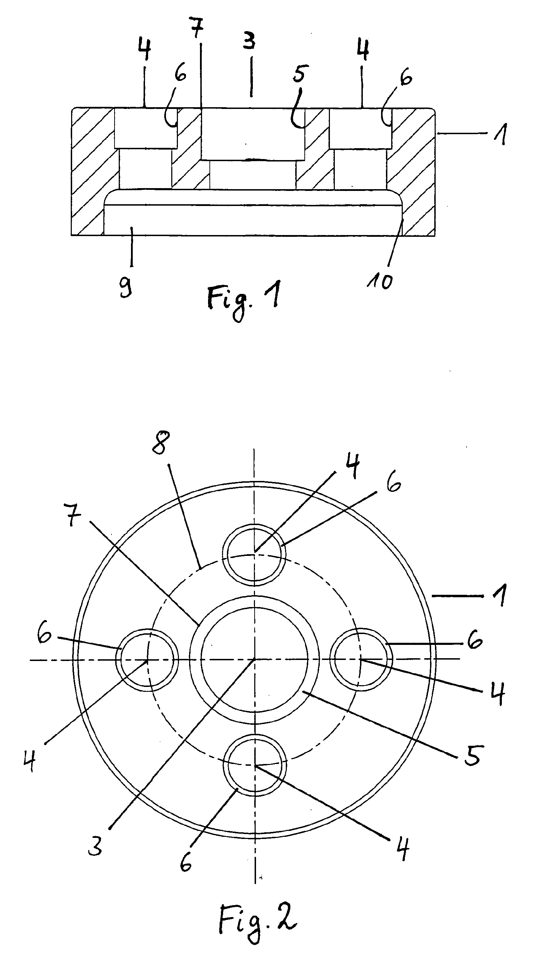

Figur 1 zeigt eine Schnittansicht eines erfindungsgemäßen Sondenkopfoberteils 1, welches einen zentralen Vorlauf 3 sowie vier äquidistant um den Vorlauf angeordnete Rückläufe 4, wovon in der dargestellten Schnittansicht nur zwei sichtbar sind, aufweist. Zur Adaptierung von Rohrleitungen weisen der Vorlauf 3 und die Rückläufe 4 entsprechende Anschlüsse 5, 6 auf, wobei der Vorlauf eine Berandung 7 aufweist, bezüglich welcher die Rückläufe 4 jeweils äquidistant angeordnet sind. Sowohl der Vorlauf 3 als auch die Rückläufe 4 machen einen Hohlraum 9, welcher eine Berandung 10 aufweist, zugänglich. In einer praxisrelevanten Ausführungsform des dargestellten Sondenkopfoberteils 1 sind der zentrale Vorlauf 3 in Form einer Bohrung mit Durchmesser 40 mm und die vier nur teilweise dargestellten Rückläufe 4 mittels weiterer Bohrungen mit Durchmesser 25 mm realisiert.

In Figur 2 ist das Sondenkopfoberteil 1 aus Figur 1 in einer Draufsicht dargestellt, wobei diese erkennen läßt, daß die Bohrungen für die vier Rückläufe 4 bzw. die vorgelagerten Rücklaufanschlüsse 6 auf einem geschlossenen Lochkreis 8 mit konstantem Radius und jeweils zueinander äquidistant, also um einen Winkel von 90° bezüglich des vorbenannten Radius zueinander beabstandet angeordnet sind.

In einer vorteilhaften Ausführungsform des Sondenkopfoberteils 1 ist dieses zumindest im Bereich der Vorlauf- und Rücklaufanschlüsse 5, 6 zumindest teilweise aus einem schmelzbaren Kunststoff ausgebildet, so daß die mit dem Sondenkopfoberteil 1 zu adaptierenden Rohrleitungen für Vorlauf 3 und Rücklauf 4 auf einfache Art und Weise zum Beispiel mittels Heizelementmuffenschweißens in Verbindung gebracht werden können. Dem Einschweißen der zumeist in Ringbundware gelieferten Rohre für Vorlauf 3 und Rücklauf 4 ist in der Regel noch ein Heizelementstumpfschweißen sowohl des Oberteils 1 als auch des Unterteils 2 eines erfindungsgemäßen Sondenkopfes unter Berücksichtigung der DVS-Richtlinien vorangestellt.

Den Figuren 1 und 2 ist des weiteren zu entnehmen, daß aufgrund der zentralen Anordnung des Vorlaufs 3 das durch diesen einströmende Medium entsprechend zentral in den von Oberteil 1 und Unterteil 2 gebildeten Hohlraum 9 eintritt, um dann verteilt auf die vier Rückläufe 4 wiederum, sich bei seinem Weg durch das Erdreich erwärmend, in Richtung des oberirdisch gelagerten Wärmetauschers zu propagieren.

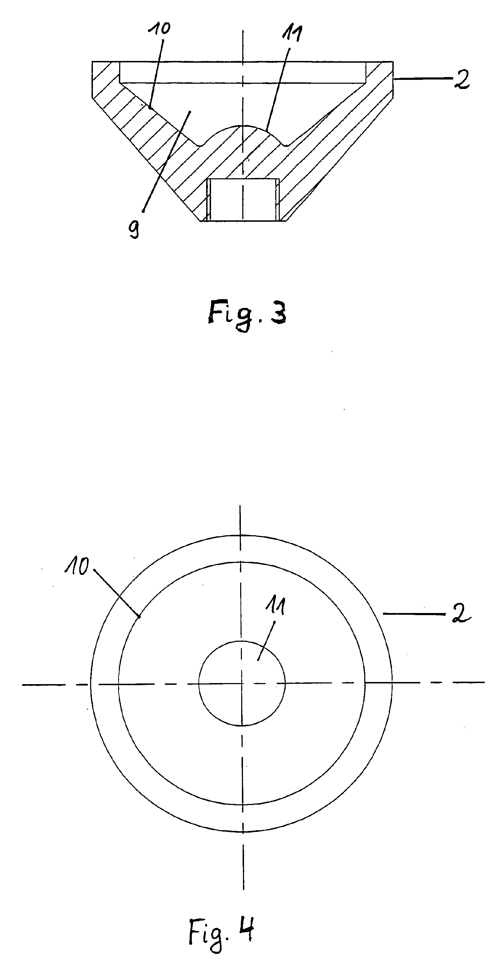

Figur 3 zeigt eine Schnittansicht eines Sondenkopfunterteils 2, welches im Zusammenwirken mit dem Sondenkopfoberteil 1 einen Hohlraum 9 abgrenzt, welcher ausschließlich über den zentralen Vorlauf 3 sowie die daherum angeordneten Rückläufe 4 des Sondenkopfoberteils 1 zugänglich ist. Die in Figur 3 eingezeichnete Mittellinie ist gleichzeitig auch eine Verlängerung der Symmetrieachse des zentralen Vorlaufs 3 des Sondenkopfoberteils 1 und gibt somit ebenfalls die charakteristische Strömungsrichtung des durch den Vorlauf 3 in den Hohlraum 9 eintretenden Mediums an. Folglich ist Figur 3 zu entnehmen, daß ein durch den Vorlauf 3 eintretendes Medium unmittelbar nach Eintritt in den Hohlraum 9 mehr oder weniger zentral auf die Anformung 11 trifft, wobei die Formgebung der Anformung 11 prinzipiell derart zu wählen ist, daß das durch den Vorlauf 3 eintretende Medium zum einen möglichst homogen den bereitgestellten Hohlraum 9 durchdringt, so daß sich ein geringer Druckgradient über das Hohlraumvolumen einstellt, und gleichzeitig die sich etablierende Strömungsart möglichst turbulent ist. Diese beiden Voraussetzungen erfüllt in der Regel bereits eine Anformung 11 mit sphärischer Oberfläche, wobei jedoch auch denkbar ist, daß die zentrale Anformung 11 beispielsweise eine Kegelform aufweist. Grundsätzlich sollten bei einem achsensymmetrischen Hohlraum 9 alle Verwendung findenden Anformungen 11 symmetrisch um die eingezeichnete Mittellinie sein, da dies ein Minimalkriterium für die angestrebte homogene Durchsetzung des Hohlraums 9 von dem eingesetzten Medium ist. Um darüber hinaus weiteren Einfluß auf die Bildung von möglichst turbulenter Strömung des Mediums im Erdsondeninneren zu nehmen, kann die Berandung 10 des Hohlraums 9 bereits während der Herstellung von sowohl Sondenkopfoberteil 1 als auch Sondenkopfunterteil 2 mit einer vorbestimmten Rauhigkeit oder einem bevorzugten Oberflächenprofil ausgestattet werden, wobei dies bereits dadurch erreicht werden kann, daß die zur Herstellung von Oberteil 1 und Unterteil 2 eingesetzten Mittel entsprechend gewählt und betrieben werden. Beispielsweise lassen sich die mechanisch bearbeiteten Oberflächen der Berandung 10 des Hohlraums 9 bezüglich ihrer Rauhigkeit über die Schneidengeometrie des Drehmeißels und die gewählte Schnittgeschwindigkeit beeinflussen.

Figur 4 ist eine Draufsicht eines erfindungsgemäßen Sondenkopfunterteils 2, welches wiederum die für die Erzielung einer möglichst homogenen Durchdringung des Hohlraums durch das durch den Vorlauf 3 zugeführte Medium wesentlichen Geometrien aufweist, welche insbesondere die bezüglich der senkrecht zur Zeichnungsebene stehenden Achse symmetrische Anformung 11 im Zusammenwirken mit der ebenfalls eingezeichneten und zu derselben Achse symmetrischen Berandung 10 des Hohlraums 9 ist.

Entgegen der in Figuren 1 bis 4 dargestellten für die Praxis besonders relevanten Ausführung der erfindungswesentlichen Merkmale mit Rotationssymmetrie sind für spezielle, zum Beispiel durch ein vorhandenes Bohrloch vorgegebene Anwendungen auch abweichende Geometrien und Designs denkbar. Beispielsweise kann sich je nach Einsatz der erfindungsgemäßen Sonde auch eine im wesentlichen ellipsenförmige Geometrie des Vorlaufs 3 als zweckmäßig herausstellen, so daß folglich die um den Vorlauf bezüglich dieses äquidistant angeordneten Rückläufe ebenfalls auf einer Ellipse liegen. Des weiteren können für andere Anwendungen auch Systeme mit im wesentlichen quadratischen oder rechteckigen Vorlaufquerschnitten sinnvoll sein. Entsprechend ist dann auch die Geometrie der Anformung 11 an die Geometrie des Hohlraums 9 anzupassen.

## Patentansprüche

1. Sonde für die Erdwärmegewinnung mit einem Sondenkopf, bestehend aus einem Oberteil (1) und einem Unterteil (2), **dadurch gekennzeichnet, daß** der Sondenkopf eine fluidische Verbindung zwischen einem Vorlauf (3) und zumindest zwei Rückläufen (4) bereitstellt.

2. Sonde nach Anspruch 1, **dadurch gekennzeichnet, daß** der Sondenkopf Anschlüsse (5, 6) für den Vorlauf (3) und die zumindest zwei Rückläufe (4) aufweist, wobei die Rücklaufanschlüsse (6) äquidistant zu einer Berandung (7) des Vorlaufanschlusses (5) angeordnet sind.

3. Sonde nach Anspruch 2, **dadurch gekennzeichnet, daß** die Rücklaufanschlüsse (6) darüber hinaus äquidistant zu jeweils benachbarten Rücklaufanschlüssen (6) angeordnet sind.

4. Sonde nach Anspruch 3, **dadurch gekennzeichnet, daß** der Sondenkopf vier Rücklaufanschlüsse (6) aufweist, deren Symmetrieachsen einen geschlossenen Lochkreis (8) schneiden und entlang des Lochkreises (8) um jeweils einen 90°-Kreisbogen voneinander beabstandet sind.

5. Sonde nach einem der vorangegangenen Ansprüche, **dadurch gekennzeichnet, daß** das Oberteil (1) und das Unterteil (2) im zusammengesetzten Zustand einen Hohlraum (9) bilden, welcher über die Rücklaufanschlüsse (6) und den Vorlaufanschluß (5) zugänglich ist, wobei die Berandung (10) des Hohlraums (9) eine Anformung (11) aufweist, welche derart angeordnet ist, daß ein im Betrieb der Sonde durch den Vorlauf (3) eintretender Fluidstrom möglichst zentral auf die Anformung (11) trifft.

6. Sonde nach Anspruch 6, **dadurch gekennzeichnet, daß** die Symmetrieachsen von Vorlaufanschluß (5) und Anformung (11) zusammenfallen.

7. Sonde nach Anspruch 5 oder 6, **dadurch gekennzeichnet, daß** die Anformung (11) im wesentlichen die Form einer Halbkugel oder eines anderen Kugelsegment, oder eine im wesentlichen konvexe Formgebung aufweist.

8. Sonde nach Anspruch 5 oder 6, **dadurch gekennzeichnet, daß** die Anformung (11) im wesentlichen die Form eines Kegels aufweist.

9. Sonde nach einem der Ansprüche 5 bis 8, **dadurch gekennzeichnet, daß** sich die Anformung (11) bezüglich des Verlaufs der Berandung (10) des Hohlraums (9) in Betriebstellung der Sonde an einer tiefstgelegenen Position im Hohlraum (9) befindet.

10. Sonde nach Anspruch 9, **dadurch gekennzeichnet, daß** die Berandung (10) des Hohlraums (9) in Richtung Anformung (11) im wesentlichen kegelförmig oder trichterförmig zusammenläuft.

11. Sonde nach einem der Ansprüche 5 bis 10, **dadurch gekennzeichnet, daß** die Berandung (10) des Hohlraums (9) ein vorgegebenes Oberflächenrelief bei einer vorgegebenen Rauhigkeit aufweist.
